# EUROPÄISCHE PATENTSCHRIFT

(11) **EP 0 580 948 B1**
(45) Veröffentlichungstag und Bekanntmachung des Hinweises auf die Patenterteilung: **06.11.1996**
(21) Anmeldenummer: 93104781.5
(22) Anmeldetag: 23.03.1993
(51) Int. Cl.: E02F 3/96, E04G 23/08, A62B 3/00

(54) **Mehrzweckbrechwerkzeug für Arbeitsmaschinen**
Multipurpose crusher-type implement for working machines
Outil de broyage polyvalent pour engins de travail

(30) Priorität: 31.07.1992 DE 9210292 U
(43) Veröffentlichungstag der Anmeldung: 02.02.1994
(73) Patentinhaber: Mieger, Rolf, D-88457 Kirchdorf (DE)
(72) Erfinder: Mieger, Rolf, D-88457 Kirchdorf (DE)
(74) Vertreter: Laufhütte, Dieter, Dr.-Ing.

(56) Entgegenhaltungen:
- EP-A- 0 362 098
- DE-A- 2 722 258
- GB-A- 2 071 053

## Beschreibung

Die Erfindung betrifft ein Werkzeug für Arbeitsmaschinen, gemäß dem Oberbegriff von Anspruch 1, bei dem unterschiedliche funktionale Arbeitsbereich vorgesehen sind, mit denen jeweils gesonderte Arbeiten durchführbar sind.

Derartige Werkzeuge können an Arbeitsmaschinen, beispielsweise Hydraulikbaggern, Hydraulikseilbaggern oder dergleichen, angebaut werden.

Ein derartiges Werkzeug ist aus der GB-A-2 071 053 bekannt.

Es sind beispielsweise Abbruchwerkzeuge bzw. Betonbeißer zur Zurüstung an Arbeitsmaschinen bekannt, die unterschiedliche Ausführungen aufweisen. Diese bekannten Abbruchwerkzeuge können dem Beton zwar vollkommen brechen, aber die bestehende Armierung kann durch diese Werkzeuge nicht oder nur unvollkommen durchtrennt werden. Derartige Armierungen oder Träger im Beton müssen daher mittels eines Brenners oder einer Schrottschere durchtrennt werden. Bei der Verwendung von Schrottscheren muß die Arbeitsmaschine entsprechend umgerüstet werden.

Es sind allerdings bereits Betonbeißer bekannt, die in ihrem sogenannten Halsbereich eine kleine Schere aufweisen, deren Funktion bei weitem nicht ausreicht, um einen reibungslosen Arbeitsablauf zu gewährleisten. Um eine Verbesserung dieser Arbeitsweise Rechnung zu tragen, wurden Betonbeißerscheren entwickelt, die im vorderen Drittel des Scherenbereichs Beton brechen können und die in den hinteren zwei Dritteln die Armierungsscheren enthalten. Hierzu sind die hinteren beiden Drittel der Betonbeißerscheren als Messerschneiden ausgebildet. Allerdings ist bei Einsatz eines derartigen Kombinationswerkzeuges der Messerbereich auch beim Betonbrechen im Eingriff und unterliegt einem entsprechend hohen Verschleiß. Nachteilig ist hier darüber hinaus die geringe Brechkraft, da diese ja durch das erste Drittel des Armes aufgebracht werden muß.

Aufgabe der vorliegenden Erfindung ist es, ein gattungsgemäßes Werkzeug derart weiterzubilden, daß dieses multifunktional einsetzbar ist, wobei gleichzeitig eine hohe Stabilität und lange Standzeit sowie ein effektiver Einsatz, beispielsweise bei Abbrucharbeiten, ermöglicht wird.

Ausgehend von einem gattungsgemäßen Werkzeug wird diese Aufgabe erfindungsgemäß durch den kennzeichnenden Teil des Anspruchs 1 gelöst. Hierzu sind Verriegelungselement vogsehen, mittels denen jeweils ein Seitenteil bezüglich des Mittelteils festlegbar ist, wenn dieses beim Arbeitseinsatz des Werkzeuges gerade nicht gebraucht wird. Der wesentliche Vorteil des erfindungs-gemäßen Werkzeuges liegt darin, daß ein Hydraulikzylinder für zwei Werkzeuge genutzt werden kann und daß die Stützwirkung des nicht in Funktion befindlichen Werkzeugarmes eine wesentlich geringere Belastung auf das Werkzeugmittelteil bedeutet. Hierdurch kann das Einsatzgewicht des bifunktionalen Werkzeugs in einem Bereich liegen, der nicht wesentlich über dem Gewichtsbereich eines einfachen Arbeitswerkzeuges liegt. Die beim Öffnen des Werkzeuges entstehenden Kräfte werden über entsprechende Verriegelungselemente, beispielsweise Verriegelungsbolzen oder Sperren, aufgenommen. Das erfindungsgemäße Werkzeug wird durch die sich an den Anspruch 1 anschließenden Unteransprüche vorteilhaft ausgebildet.

So können in einem Kommunikationswerkzeug beispielsweise folgende Werkzeugpaarungen vorteilhaft zusammengefaßt werden:
Greiferzange und Alligatorschere,
Betonbeißer und Betonzerkleinerer,
Geierschnabelschere und Alligarorschere,
Holzspalter und Holzschneider und
Betonbrecher und Schere.

Weitere Einzelheiten und Vorteile der vorliegenden Erfindung werden anhand von den in der Zeichnung dargestellter Ausführungsformen im folgenden näher erläutert. Es zeigen:
- Figur 1:: eine schematische Darstellung einer ersten Ausführungsform des erfindungsgemäßen Werkzeugs in seitlicher Darstellung;
- Figur 2:: die Ausführung gemäß Figur 1 in einer anderen Arbeitsstellung;
- Figur 3:: eine zweite Ausführungsform des erfindungsgemäßen Werkzeugs in schematischer seitlicher Darstellung;
- Fig. 4 u. 5:: jeweils schematische Darstellungen von Modifikationen gemäß der Ausführungsform nach Figur 3 von der Pfeilrichtung A in Figur 3 aus gesehen;
- Figur 6:: eine weitere Ausführungsform des erfindungsgemäßen Werkzeuges;
- Figur 7:: eine vereinfachte schematische Darstellung des erfindungsgemäßen Werkzeugs in Seitenansicht und
- Fig. 8 u. 9:: Details der Verschlußeinrichtung.

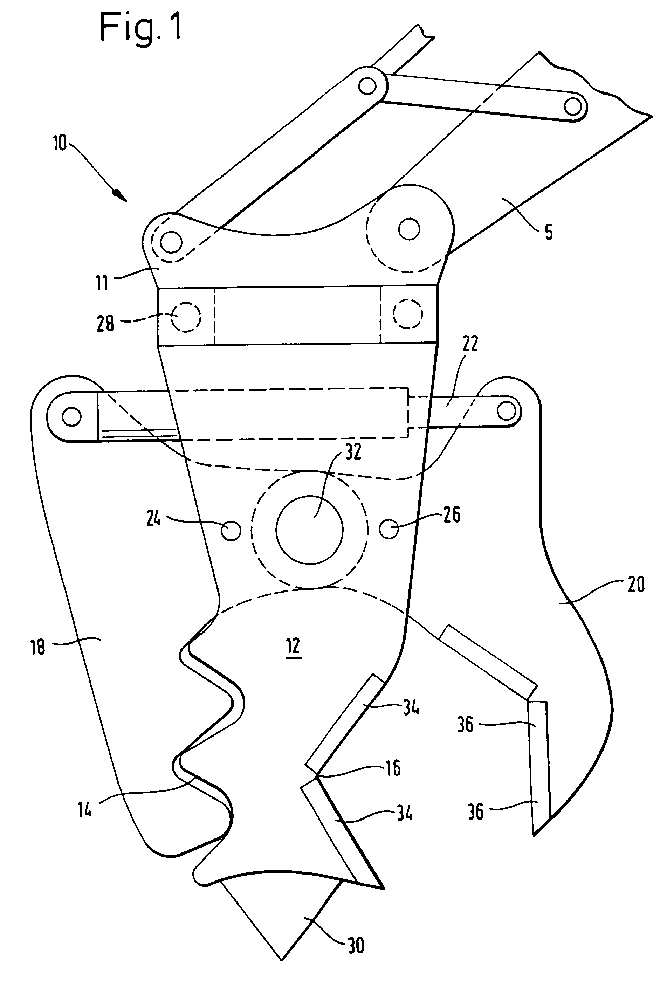

In Figur 1 ist eine erste Ausführungsform des erfindungsgemäßen Werkzeuges 10 über ein entsprechendes Aufnahmeteil 11 an einem Baggerarm 5 in an sich bekannter Art und Weise angelenkt. Das Werkzeug weist ein Mittelteil 12 auf, dessen seitlichen Flanken 14 und 16 jeweils den Teil eines Arbeitswerkzeugs bilden. Mit diesen seitlichen Flanken 14 und 16 wirken Seitenteile 18 und 20 zusammen, die jeweils ein anderes Teil des Arbeitswerkzeuges bilden. Die Seitenteile 18 und 20 sind schwenkbar um einen Bolzen 32 gelagert. Die Schwenkbewegung erfolgt über eine Kolben-Zylinderanordnung 22, die jeweils an den Seitenteilen 18 und 20 in der in Figur 1 dargestellte Art und Weise angreift. Dabei ist während des Verschwenkens jeweils ein Seitenteil 18 bzw. 20 über Verriegelungselemente 24 bzw. 26 gegenüber dem Mitteilteil 12 festlegbar, so daß jeweils nur ein Seitenteil ausgeschwenkt wird.

Das Mittelteil ist über einen Drehkranz 28 an dem Anbauteil 11 gelagert. Dadurch kann das Werkzeug in hier nicht dargestellter Art und Weise um 360° bezogen auf seine Mittelachse gedreht werden. Als Antriebe hierfür kommt ein hydraulischer oder auch ein elektrischer Antrieb in Frage. In der Ausführungsform gemäß Figur 1 weist das Mittelteil noch einen Werkzeugdorn 30 auf.

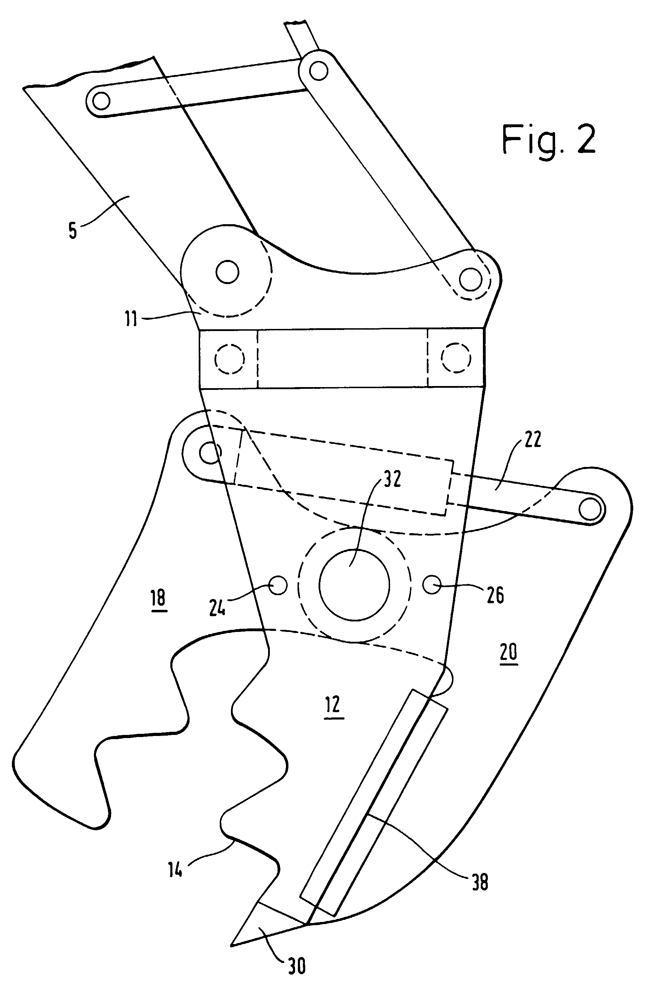

In der in Figur 1 dargestellten Ausführungsform bildet das Seitenteil 18 zusammen mit der seitlichen Flanke 14 des Mittelteils einen Betonbeißerteil. Die seitliche Flanke 16 bildet mit dem Seitenteil 20 eine Schrottschere. Hierzu weisen die seitliche Flanke 16 bzw. das Seitenteil 20 entsprechende Schneidverstärkungen 34 bzw. 36 auf. Während in der Figur 1 der Betonbeißerteil über das Verschlußelement 24 gegenüber dem Mittelteil 12 festgelegt ist, ist der Scherenteil über die Kolben-Zylinderanordnung 22 aufgesteuert, d.h. das Seitenteil 20 ist ausgefahren. In Figur 2 ist das Seitenteil 18 ausgefahren, während das Seitenteil 20 mittels des Verriegelungselements 26 gegenüber dem Mittelteil 12 festgelegt ist. In dieser Ausführungsform ist der Schneidenbereich 38 des Scherenteils gegenüber der Darstellung nach Figur 1 leicht modifiziert, wodurch eine weitere mögliche Modifikation der Werkzeugformung angegeben ist.

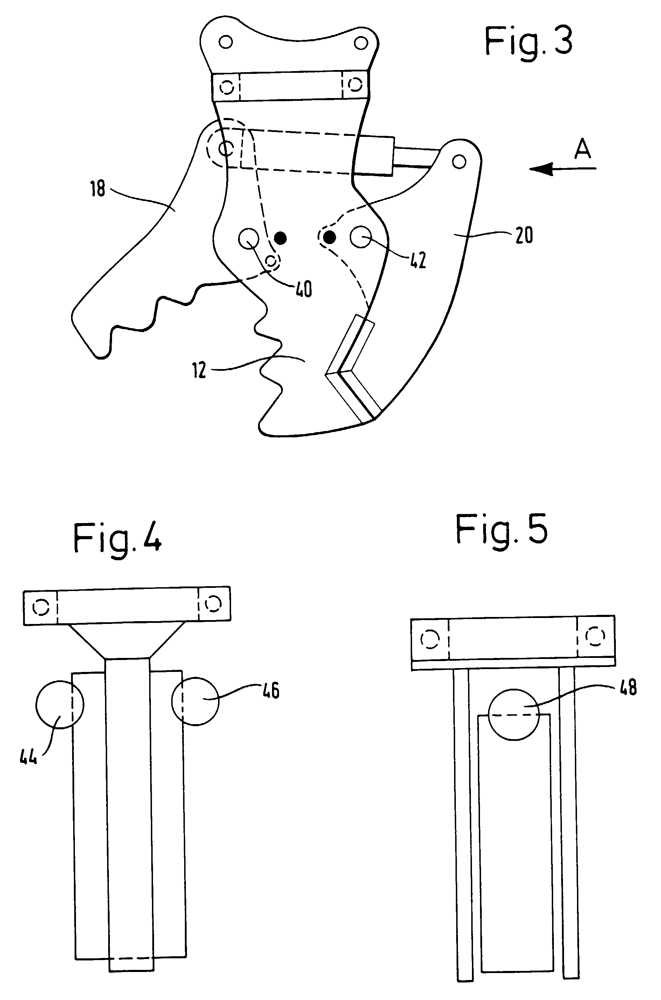

In der Ausführungsform gemäß Figur 3 sind die Seitenteile 18 bzw. 20 über separate Lagerbolzen 40 und 42 auf dem Mittelteil gelagert. Ansonsten entspricht diese Ausführungsform der bereits zuvor geschilderten Ausführungsform. Die Figuren 4 und 5 geben unterschiedliche Kolben-Zylinderanordnungen bei einer Bauform gemäß Figur 3 an, wobei die Ausführungsform gemäß Figur 4 zwei parallel verlaufende Kolben-Zylinderanordnungen 44 bzw. 46 zeigt, während die Figur 5 einen mittig angeordnete Kolben-Zylinderanordnung 48 zeigt.

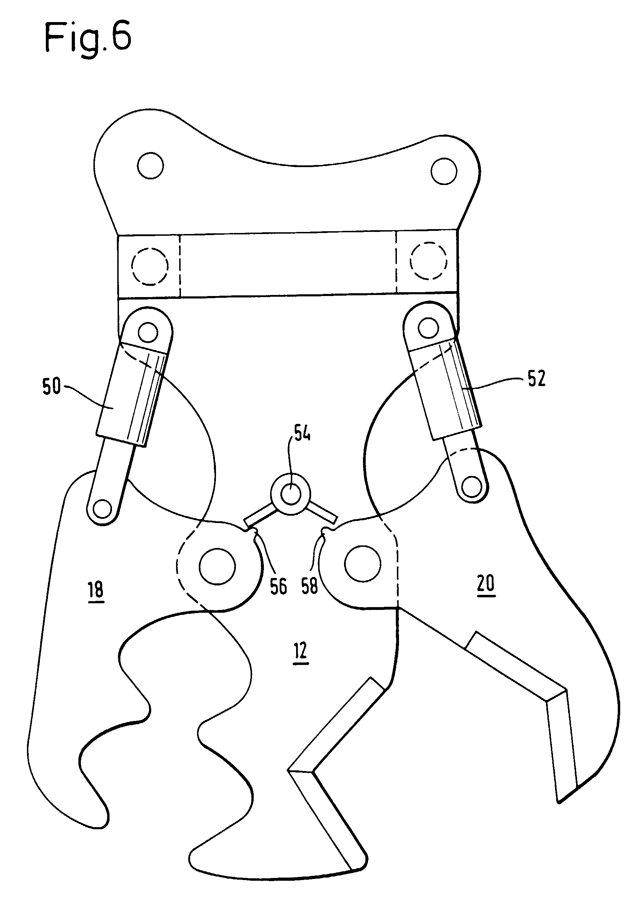

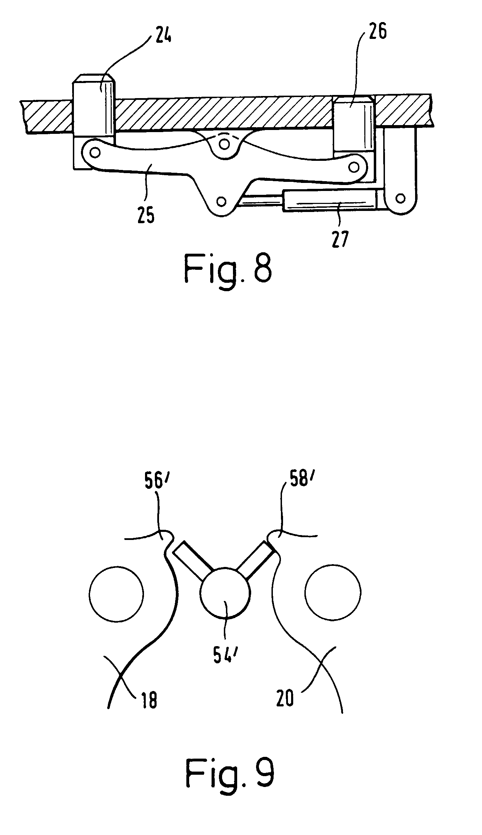

In der Ausführungsform gemäß Figur 6 sind separate Kolben-Zylinderanordnungen 50 und 52 zur Verschwenkung der Seitendteile 18 bzw. 20 vorgesehen. Dabei ist die Kolben-Zylinderanordnung 50 zwischen dem Seitenteil 18 und einem Anlenkpunkt an dem Mittelteil 12 vorgesehen, während die Kolben-Zylinderanordnung 52 zwischen dem Seitenteil 20 und einem entsprechenden Anlenkpunkt am Mittelteil 12 angeordnet ist. Mit 54 ist eine schwenkbare Sperre bezeichnet, die ein Verriegelungselement darstellt. Diese wirkt mit entsprechenden Vorsprüngen 56 und 58 an den Seitenteilen 18 und 20 zusammen. Eine Detailansicht einer entsprechenden Sperre 54', die leicht modifiziert ist und die mit Vorsprüngen 56' und 58' der Seitenteile 18 bzw. 20 zusammenwirkt, ist in Figur 9 dargestellt.

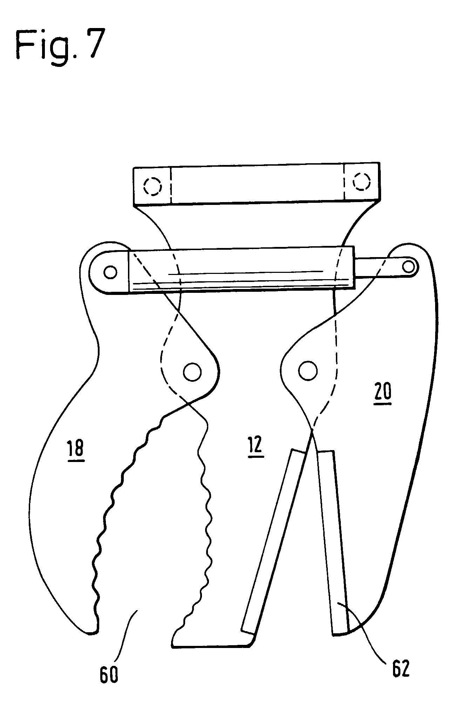

In Figur 7 ist eine weitere Ausführungsform des erfindungsgemäßen Werkzeugs dargestellt. Ein Bereich des Werkzeugs ist hier als Greifzange 60 und ein Bereich als Alligatorschere 62 ausgebildet. In nicht näher dargestellter Art und Weise können auch noch andere Kombinationen verwirklicht werden. So sind als Kombinationen denkbar:
Betonbeißer und Betonzerkleinerer,
Geierschnabelschere mit kleiner Öffnung für Profile und
Alligatorschere mit großer Öffnung für Bleche und
Holzspalter und Holzschneider.

Schließlich zeigt Figur 8 ein Detail der Bolzenverriegelung, wobei hier die Bolzen 24 und 26 über einen Umlenkhebel 25 und eine Kolben-Zylindereinheit 27 hydraulisch ein- bzw. ausschwenkbar sind.

## Patentansprüche

1. Werkzeug für Arbeitsmaschinen, bei dem unterschiedliche funktionale Arbeitsbereiche vorgesehen sind, mit denen jeweils gesonderte Arbeiten durchführbar sind, umfassend
einen Mittelteil (12), dessen seitliche Flanken (14, 16) jeweils ein Teil des Arbeitswerkzeugs bilden,
zwei an dem Mittelteil (12) schwenkbar gelagerte Seitenteile (18, 20), die jeweils die anderen Teile des Arbeitswerkzeugs bilden,
mindestens eine Kolben-Zylinderanordnung (22) zur Verschwenkung der Seitenteile (18, 20) bezüglich des Mittelteils (12),
gekennzeichnet durch,
Verriegelungselemente (24, 26), mittels denen jeweils ein Seitenteil (18, 20) bezüglich des Mittelteils (12) festlegbar ist.

2. Werkzeug nach Anspruch 1, dadurch gekennzeichnet, daß es über einen Drehkranz (28) in einem Anbauteil gelagert ist.

3. Werkzeug nach Anspruch 1 oder 2, dadurch gekennzeichnet, daß die Seitenteile um einen im Mittelteil gelagerten, zentralen Bolzen (32) schwenkbar sind.

4. Werkzeug nach Anspruch 1 oder 2, dadurch gekennzeichnet, daß die Seitenteile jeweils um eigene im Mittelteil gelagerte Bolzen (40, 42) schwenkbar sind.

5. Werkzeug nach einem der Ansprüche 1 bis 4, dadurch gekennzeichnet, daß die mindestens eine Kolben-Zylinderanordnung (22) mit ihren Enden unmittelbar an den Seitenteilen angreift.

6. Werkzeug nach einem der Ansprüche 1 bis 4, dadurch gekennzeichnet, daß für jedes Seitenteil eine eigene Kolben-Zylinderanordnung (50, 52) vorgesehen ist, die einerseits an dem Seitenteil und andererseits an einem geeigneten Anlenkpunkt am Mittelteil angelenkt ist.

7. Werkzeug nach einem der Ansprüche 1 bis 6, dadurch gekennzeichnet, daß die Verriegelungselemente (24, 26) aus direkt oder über Umlenkhebel (25) hydraulisch oder elektrisch betätigbaren Bolzen bestehen.

8. Werkzeug nach einem der Ansprüche 1 bis 7, dadurch gekennzeichnet, daß die Verriegelungselemente aus am Mittelteil schwenkbar gelagerten Sperren (54) bestehen, die den entsprechende Vorsprünge (56, 58) der Seitenteile einschwenkbar sind.

9. Werkzeug nach einem der Ansprüche 1 bis 8, dadurch gekennzeichnet, daß ein Seitenteil zusammen mit der dieser zugewandten seitlichen Flanke des Mittelteils (12) ein Scherteil bildet, während das andere Seitenteil zusammen mit der ihr zugewandten seitlichen Flanke des Mittelteils ein Betonbeißerteil bildet.

10. Werkzeug nach einem der Ansprüche 1 bis 7, dadurch gekennzeichnet, daß ein Seitenteil (18, 20) zusammen mit der dieser zugewandten seitlichen Flanke des Mittelteils (12) eine Greiferzange bildet, während das andere Seitenteil zusammen mit der ihr zugewandten seitlichen Flanke des Mittelteils eine Alligatorschere bildet.

11. Werkzeug nach einem der Ansprüche 1 bis 7, dadurch gekennzeichnet, daß ein Seitenteil (18, 20) zusammen mit der dieser zugewandten seitlichen Flanke des Mittelteils (12) ein Betonbeißerteil bildet, während das andere Seitenteil zusammen mit der ihr zugewandten seitlichen Flanke des Mittelteils ein Betonzerkleinerer bildet.

12. Werkzeug nach einem der Ansprüche 1 bis 7, dadurch gekennzeichnet, daß ein Seitenteil zusammen mit der dieser zugewandten seitlichen Flanke des Mittelteils (12) eine Geierschnabelschere bildet, während das andere Seitenteil zusammen mit der ihr zugewandten seitlichen Flanke des Mittelteils eine Alligatorschere bildet.

13. Werkzeug nach einem der Ansprüche 1 bis 7, dadurch gekennzeichnet, daß ein Seitenteil zusammen mit der dieser zugewandten seitlichen Flanke des Mittelteils (12) einen Holzspalter bildet, während das andere Seitenteil zusammen mit der ihr zugewandten seitlichen Flanke des Mitteilteils einen Holzschneider bildet.

## Claims

1. A tool for working machines, wherein different functional working zones are provided, by means of which separate works can be respectively executed, comprising
a central part (12) whose lateral flanks (14, 16) form in each case a part of the working tool,
two side parts (18, 20) pivotably mounted on the central part (12) which form in each case the other parts of the working tool,
at least one piston-cylinder arrangement (22) for pivoting the side parts (18, 20) relative to the central part (12),
characterized by
locking elements (24, 26) by means of which one side part (18, 20) can in each case be fixed in position relative to the central part (12).

2. A tool according to claim 1, characterized in that it is mounted in an attached part by means of a ring mount (28).

3. A tool according to claim 1 or 2, characterized in that the side parts are pivotable round one central pin (32) mounted in the central part.

4. A tool according to claim 1 or 2, characterized in that the side parts are pivotable in each case round their own pins (40, 42) mounted in the central part.

5. A tool according to one of claims 1 to 4, characterized in that at least one piston-cylinder arrangement (22) acts with its ends directly on the side parts.

6. A tool according to one of claims 1 to 4, characterized in that for each side part there is provided its own piston-cylinder arrangement (50, 52) which is articulated at one side to the side part, and at the other side to a suitable articulation point on the central part.

7. A tool according to one of claims 1 to 6, characterized in that the locking elements (24, 26) consist of pins that can be actuated hydraulically or electrically, directly or by means of shift levers (25).

8. A tool according to one of claims 1 to 7, characterized in that the locking elements consist of stops (54) pivotably mounted on the central part, which stops can be pivoted into corresponding projections (56, 58) of the side parts.

9. A tool according to one of claims 1 to 8, characterized in that one side part forms, together with the lateral flank of the central part (12) facing it, a shearing part, while the other side part forms, together with the lateral flank of the central part facing it, a concrete ripper.

10. A tool according to one of claims 1 to 7, characterized in that one side part (18, 20) forms, together with the lateral flank of the central part (12) facing it, a pair of gripper tongs, while the other side part forms, together with the lateral flank of the central part facing it, an alligator shearing device.

11. A tool according to one of claims 1 to 7, characterized in that one side part (18, 20) forms, together with the lateral flank of the central part (12) facing it, a concrete ripper, while the other side part forms, together with the lateral flank of the central part facing it, a concrete crusher.

12. A tool according to one of claims 1 to 7, characterized in that one side part forms, together with the lateral flank of the central part (12) facing it, a vulture bill-type shearing device, while the other side part forms, together with the lateral flank of the central part facing it, an alligator shearing device.

13. A tool according to one of claims 1 to 7, characterized in that one side part forms, together with the lateral flank of the central part (12) facing it, a wood splitter, while the other side part forms, together with the lateral flank of the central part facing it, a wood cutter.

## Revendications

1. Outil pour machines-outils, dans lequel différentes zones de travail fonctionnelles sont prévues, par lesquelles des travaux distincts peuvent être exécutés, comprenant :
un élément médian (12) dont les flancs latéraux (14, 16) forment une partie de l'outil de travail,
deux éléments latéraux (18, 20) montés de façon pivotante sur l'élément médian (12) et qui forment respectivement les autres parties de l'outil de travail,
au moins un agencement de vérin à cylindre et à piston pour le pivotement des éléments latéraux (18, 20) relativement à l'élément médian (12),
caractérisé par :
des éléments de verrouillage (24, 26) au moyen desquels un élément latéral (18, 20) est immobilisable relativement à l'élément médian (12).

2. Outil selon la revendication 1, caractérisé en ce qu'il est monté par l'intermédiaire d'une couronne de rotation (28) sur un élément rapporté.

3. Outil selon la revendication 1 ou 2, caractérisé en ce les éléments latéraux peuvent pivoter autour d'un axe central (32) monté dans l'élément médian.

4. Outil selon la revendication 1 ou 2, caractérisé en ce que les éléments latéraux peuvent pivoter respectivement autour d'axes propres (40, 42) montés dans l'élément médian.

5. Outil selon l'une des revendications 1 à 4, caractérisé en ce qu'au moins un agencement de vérin à cylindre et à piston (22) attaque, par ses extrémités, directement les éléments latéraux.

6. Outil selon l'une des revendications 1 à 4, caractérisé en ce que pour chaque élément latéral est prévu un agencement de vérin à cylindre et à piston (50, 52) qui est articulé, d'une part, à l'élément latéral et, d'autre part, à un point d'articulation approprié sur l'élément médian.

7. Outil selon l'une des revendications 1 à 6, caractérisé en ce que les éléments de verrouillage (24, 26) consistent en des broches actionnables hydrauliquement ou électriquement directement ou par l'intermédiaire de leviers de renvoi (25).

8. Outil selon l'une des revendications 1 à 7, caractérisé en ce que les éléments de verrouillage consistent en des organes de blocage (54) montés pivotants sur l'élément médian et qui coopèrent de façon pivotante avec des saillies (56, 58) des éléments latéraux.

9. Outil selon l'une des revendications 1 à 8, caractérisé en ce qu'un élément latéral forme, ensemble avec le flanc latéral tourné vers celui-ci de l'élément médian (12), un élément de cisaillement tandis que l'autre élément latéral forme, ensemble avec le flanc latéral tourné vers celui-ci de l'élément médian, un élément de cisaillement de béton.

10. Outil selon l'une des revendications 1 à 7, caractérisé en ce qu'un élément latéral (18, 20) forme, ensemble avec le flanc latéral tourné vers celui-ci de l'élément médian (12), une pince de préhension tandis que l'autre élément latéral forme, ensemble avec le flanc latéral tourné vers celui-ci de l'élément médian (12), une cisaille crocodile.

11. Outil selon l'une des revendications 1 à 7, caractérisé en ce qu'un élément latéral (18, 20) forme, ensemble avec le flanc latéral tourné vers celui-ci de l'élément médian (12), un élément de cisaillement de béton, tandis que l'autre élément latéral forme, ensemble avec le flanc latéral tourné vers celui-ci de l'élément médian (12), un concasseur de béton.

12. Outil selon l'une des revendications 1 à 7, caractérisé en ce qu'un élément latéral forme, ensemble avec le flanc latéral tourné vers celui-ci de l'élément médian (12), une cisaille en bec de vautour, tandis que l'autre élément latéral forme, ensemble avec le flanc latéral tourné vers celui-ci de l'élément médian (12), une cisaille crocodile.

13. Outil selon l'une des revendications 1 à 7, caractérisé en ce qu'un élément latéral forme, ensemble avec le flanc latéral tourné vers celui-ci de l'élément médian (12), un fendeur de bois, tandis que l'autre élément latéral forme, ensemble avec le flanc latéral tourné vers celui-ci de l'élément médian, un organe de coupe de bois.
